# EUROPÄISCHE PATENTSCHRIFT

(11) **EP 2 132 808 B1**
(45) Veröffentlichungstag und Bekanntmachung des Hinweises auf die Patenterteilung: **24.04.2013**
(21) Anmeldenummer: 08734346.3
(22) Anmeldetag: 03.03.2008
(51) Int. Cl.: H01M 2/20, H01M 10/06

(54) **BATTERIE**
BATTERY
BATTERIE

(30) Priorität: 07.03.2007 DE 102007011390
(43) Veröffentlichungstag der Anmeldung: 16.12.2009
(73) Patentinhaber: VB Autobatterie GmbH & Co. KGaA, 30419 Hannover (DE)
(72) Erfinder: STREUER, Peter, 30559 Hannover (DE); KOCH, Ingo, 31789 Hameln (DE)
(74) Vertreter: Plöger, Jan Manfred
(86) Internationale Anmeldenummer: PCT/DE2008/000372
(87) Internationale Veröffentlichungsnummer: WO 2008/106945

(56) Entgegenhaltungen:
- EP-A- 1 691 431
- WO-A-01/06590
- JP-A- 8 130 030

## Beschreibung

Die Erfindung betrifft eine Batterie mit mindestens einem Batteriezellenverbindungselement, das (a) einen eine quaderförmige Grundgestalt aufweisenden Verbinder zum Verbinden mit mindestens einer Platte, insbesondere mit einem Polplattensatz, an einer Unterseite des Verbinders und (b) eine Schweißlasche, die mit einem Verbinder elektrisch leitend verbunden ist, umfasst, (c) wobei in Einbaulage der Batterie der Verbinder im Wesentlichen horizontal verläuft und die Schweißlasche im Wesentlichen vertikal verläuft, und (d) wobei der Verbinder eine der Unterseite gegenüber liegende Oberseite und (e) mindestens eine an die Unterseite angrenzende Längsseite besitzt, an der die Schweißlasche mit dem Verbinder verbunden ist.

Eine solche Batterie ist beispielsweise aus der DE 103 23 529 B3 oder aus der DE 24 47 639 bekannt.

Derartige Batterien in Form von Bleiakkumulatoren werden beispielsweise als Starterbatterie in einem Automobil verwendet. Eine derartige Batterie besteht aus mehreren galvanischen Zellen, die in Reihe geschaltet und voneinander durch eine elektrisch isolierende Trennwand getrennt sind. Jede der galvanischen Zellen umfasst einen positiven und einen negativen Plattensatz, die beide jeweils aus mehreren Polplatten aufgebaut sind. Ein Batteriezellenverbindungselement verbindet die Polplatten eines Plattensatzes untereinander elektrisch und mechanisch und dient zusätzlich dazu, den Plattensatz einer galvanischen Zelle über ein weiteres Batteriezellenverbindungselement mit einem anderen Plattensatz einer anderen galvanischen Zelle durch die Trennwand hindurch elektrisch zu verkontaktieren. Ein Verbindungselement zur Verbindung von Zellen zu Akkumulatoren ist aus der EP 1 691 431 A1 bekannt.

Um einen solchen elektrischen Kontakt zu ermöglichen, werden bei der Fertigung der Batterien die Batterieverbindungselemente relativ zueinander und relativ zu einer Ausnehmung in der Trennwand ausgerichtet. Anschließend werden die Schweißlaschen zweier beidseits der Trennwand angeordneter Batteriezellenverbindungselemente miteinander verschweißt und so elektrisch miteinander verbunden.

Bei Bleiakkumulatoren besteht der Verbinder in der Regel vollständig aus Blei, das für ein Metall eine relativ geringe elektrische Leitfähigkeit hat. Bleiakkumulatoren weisen in der Regel nur Spannungen zwischen 6 Volt und 48 Volt auf. In modernen Kraftfahrzeugen wie Nutzkraftwagen werden jedoch hohe Leistungen bis zu mehreren Kilowatt benötigt, so dass unter Last große Ströme durch die Batteriezellenverbindungselemente fließen. Bei derartigen Strömen kommt es aufgrund des Innenwiderstands der Batterie zu einer unerwünschten Erwärmung, was nachteilig ist. Der Innenwiderstand der Batterie begrenzt zudem nachteiligerweise die maximale Leistung, die von der Batterie abgegeben werden kann.

Der Erfindung liegt die Aufgabe zugrunde, eine Batterie mit verringertem Innenwiderstand bereitzustellen.

Die Erfindung löst das Problem durch eine gattungsgemäße Batterie, bei der die Schweißlasche über mindestens ein lateral an der Schweißlasche angeordnetes und auf die Oberfläche des Verbinders führendes Kontaktelement mit dem Verbinder elektrisch verbunden ist.

Durch eine Batterie mit einem derartigen Batteriezellenverbindungselement wird vorteilhafterweise erreicht, dass ein elektrischer Strom, der von den Polplatten über das Batteriezellenverbindungselement fließt, einen geringeren elektrischen Widerstand erfährt als wenn das Batteriezellenverbindungselement mit der gleichen Menge an Material ohne das Kontaktelement hergestellt wäre. Durch das Kontaktelement wird das für die elektrische Leitung des Stroms zur Verfügung stehende Material des Batteriezellenverbindungselementes optimal für den Stromfluss genutzt, so dass ein reduzierter Innenwiderstand der Batterie erreichbar ist. Das reduziert die unerwünschte Erwärmung der Batterie während des Betriebs und ermöglicht eine höhere Leistungsabgabe der Batterie.

Ist ein maximal akzeptabler Innenwiderstand vorgegeben, so ermöglicht die Erfindung alternativ die Einsparung an Material für die Herstellung des Batteriezellenverbindungselements, beispielsweise von Blei.

Vorteilhaft ist zudem, dass die Erfindung mit geringem Aufwand umsetzbar ist. So müssen lediglich die Formen ausgetauscht werden, mit deren Hilfe die Batteriezellenverbindungselemente gegossen werden.

Im Rahmen der vorliegenden Erfindung wird unter einer quaderförmigen Grundgestalt verstanden, dass es möglich, nicht aber notwendig ist, dass der Verbinder im strengen mathematischen Sinn quaderförmig ausgebildet ist. Es ist vielmehr möglich, dass der Verbinder von der quaderförmigen Gestalt abweicht, indem beispielsweise mehr als sechs Flächen vorhanden sind, zwei gegenüberliegende Seiten nicht parallel zueinander verlaufen oder aneinander angrenzende Flächen unter einem anderen als einem rechten Winkel zueinander verlaufen. Derartige Modifikationen sind aus dem Stand der Technik bekannt.

Unter dem Merkmal, dass der Verbinder im Wesentlichen horizontal verläuft, ist zu verstehen, dass es möglich, nicht aber notwendig ist, dass der Verbinder streng horizontal verläuft. Es ist insbesondere ausreichend, wenn der Verbinder unter einem Winkel von weniger als 10° zur Horizontalen verläuft. Entsprechendes gilt für das Merkmal, dass die Schweißlasche im Wesentlichen vertikal verläuft. Auch hier werden Abweichungen von beispielsweise weniger als 10° von der Vertikalen als im Wesentlichen vertikal betrachtet.

In einer bevorzugten Ausführungsform ist die Batterie ein Bleiakkumulator, insbesondere ein Nutzkraftwagen-Bleiakkumulator. Nutzkraftwagen-Bleiakkumulatoren unterscheiden sich beispielsweise von Personenkraftwagen- oder Motorrad-Bleiakkumulatoren dadurch, dass die Schweißlasche zentrisch an der Längsseite des Verbinders angeordnet ist.

Es ist bevorzugt, dass die Schweißlasche zwei Kontaktelemente aufweist, die beidseits lateral an der Schweißlasche angeordnet sind, auf die Oberfläche des Verbinders führen und die Schweißlasche mit dem Verbinder elektrisch verbinden. Dabei sind die Kontaktelemente beispielsweise spiegelsymmetrisch zueinander aufgebaut, so dass das Batteriezellenverbindungselement ebenfalls spiegelsymmetrisch zu einer Spiegelebene aufgebaut ist.

Mit zunehmendem Abstand von der Oberseite des Verbinders sinkt bei einem Laden bzw. Entladen der Batterien die Stromdichte, weshalb bevorzugt vorgesehen ist, dass das Kontaktelement einen Querschnitt aufweist, der mit abnehmendem Abstand von der Oberseite des Verbinders zunimmt. Vorteilhaft ist daran zudem, dass sich das Batteriezellenverbindungselement so besonders leicht aus einer Gussform entfernen lässt.

Da ein elektrischer Strom, der von einer Polplatte stammt, die an einem äußeren Ende des Verbinders mit dem Verbinder verbunden ist, einen besonders hohen elektrischen Widerstand zu überwinden hat, ist in einer bevorzugten Ausführungsform vorgesehen, dass das Kontaktelement einen Querschnitt aufweist, der mit zunehmendem Abstand von der Schweißlasche zunimmt. Auf diese Weise wird der elektrische Widerstand verringert, den Strom von einer seitlich liegenden Polplatte überwinden muss.

Es ist bevorzugt, dass das Kontaktelement einen verbinderseitigen Übergangsbereich besitzt, in dem es in den Verbinder übergeht, dass der verbinderseitige Übergangsbereich einen lateralen Abschnitt besitzt und der laterale Abschnitt einen Lateral-Krümmungsradius aufweist, der zwischen 3 mm und 10 mm liegt. Es hat sich gezeigt, dass auf diese Weise ein besonders geringer Innenwiderstand der Batterie möglich ist. Das Adjektiv "lateral" bezieht sich dabei auf das Batteriezellenverbindungselement und bedeutet der Schweißlasche abgewandt.

Das Kontaktelement besitzt zudem vorteilhafterweise einen medialen Abschnitt, der einen Medial-Krümmungsradius aufweist, der zwischen 1 mm und 3 mm liegt. In einem schweißlaschenseitigen Übergangsbereich, in dem das Kontaktelement in die Schweißlasche übergeht, besitzt es günstigerweise einen Krümmungsradius zwischen 0,25 mm und 2 mm.

Zur Vereinfachung der Fertigung ist das Batteriezellenverbindungselement bevorzugt einstückig ausgebildet, insbesondere ist es aus Blei gegossen. Ein besonders geringer Innenwiderstand für das Batteriezellenverbindungselement ergibt sich, wenn ein auf die Oberseite projizierter Kontaktelement-Querschnitt des Kontaktelements eine Seitenlinie besitzt, die unter einem Winkel von 30° bis 60° zu der Längsachse des Verbinders verläuft. Günstig ist es, wenn der Kontaktelement-Querschnitt im Wesentlichen dreieckig ist, wobei eine weitere Seite des Kontaktelement-Querschnitts im Wesentlichen parallel zu der Längsseite des Verbinders verläuft. Der Winkel zwischen den beiden langen Seiten des Kontaktelement-Querschnitts, der seinen Scheitelpunkt innerhalb der Schweißlasche hat, beträgt dann ebenfalls 30° bis 60°.

Eine Materialeinsparung ergibt sich, wenn der Kontaktelement-Querschnitt dort, wo das Kontaktelement in den Verbinder übergeht, eine Kontaktelement-Querschnittsfläche besitzt, die kleiner ist als ein horizontaler Querschnitt der Schweißlasche auf gleicher Höhe. So ist auf jeder horizontalen Höhe der Querschnitt der Schweißlasche größer als der des Kontaktelements. Unter der Größe des Querschnitts wird dabei die Querschnittsfläche verstanden. Besonders günstig ist es, wenn der Kontaktelement-Querschnitt kleiner ist als die Hälfte des Querschnitts der Schweißlasche auf gleicher horizontaler Höhe.

Die Montage des Batteriezellenverbindungselementes wird besonders erleichtert, wenn das Kontaktelement verbinderseitig im Wesentlichen vollständig jenseits einer horizontalen Ebene angeordnet ist, die durch die Längsseite verläuft, an der die Schweißlasche mit dem Verbinder verbunden ist.

Im Folgenden wird eine Ausführungsform der Erfindung anhand der Zeichnungen näher erläutert. Dabei zeigt
- Figur 1: einen Querschnitt durch eine erfindungsgemäße Batterie,
- Figur 2: eine Draufsicht auf die Batterien gemäß Figur 1,
- Figuren 3a, 3b, 3c: zeigen Querschnittsansichten von Batteriezellenverbindungselementen gemäß dem Stand der Technik,
- Figur 4: zeigt ein Batteriezellenverbindungselement für eine erfindungsgemäße Batterie und die
- Figuren 5a, 5b, 5c, 5d: zeigen Querschnittsansichten eines Batteriezellenverbindungselements einer erfindungsgemäßen Batterie.

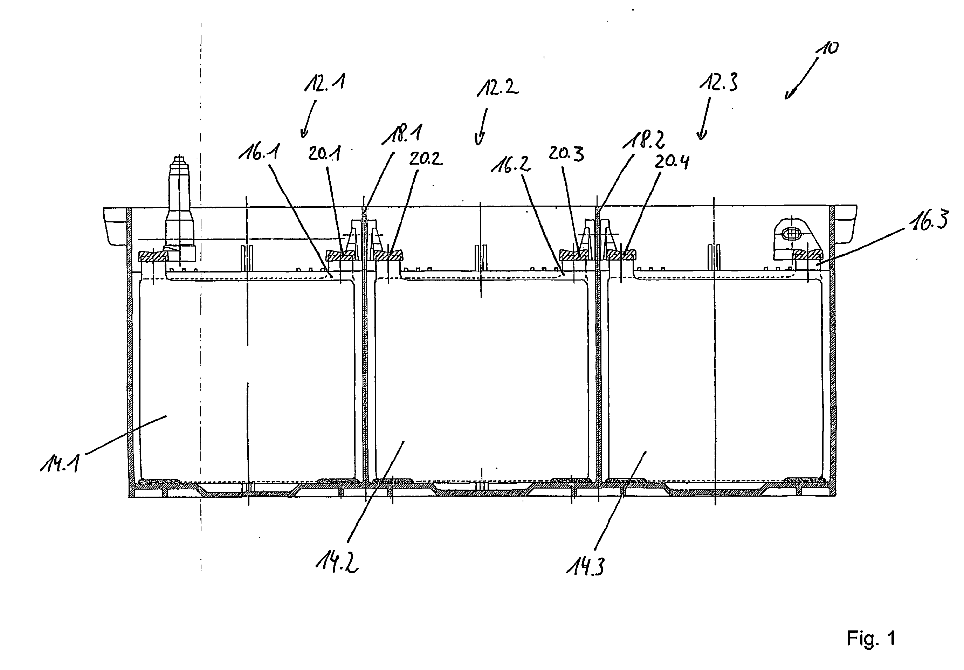

Figur 1 zeigt eine Batterie 10 in einer Querschnittsansicht, die galvanische Zellen 12.1 bis 12.6 umfasst, von denen in Figur 1 die galvanischen Zellen 12.1, 12.2 und 12.3 gezeigt sind. Die galvanischen Zellen 12.1, 12.2, 12.3 umfassen jeweils einen positiven Plattensatz 14.1, 14.2, 14.3 und einen negativen Plattensatz 16.1, 16.2 und 16.3. Die galvanischen Zellen 12.1 bis 12.3 sind durch Trennwände 18.1, 18.2 voneinander räumlich und elektrisch getrennt und in einem Gehäuse angeordnet.

Jeder der Plattensätze 14.1 bis 14.3 bzw. 16.1 bis 16.3 umfasst mehrere Polplatten, die mechanisch und elektrisch mit einem Batteriezellenverbindungselement 20.1, 20.2, 20.3 bzw. 20.4 verbunden sind. Jeweils zwei Batteriezellenverbindungselemente 20.1 und 20.2 bzw. 20.3 und 20.4 sind durch eine nicht eingezeichnete Öffnung in der jeweiligen Trennwand 18.1 bzw. 18.2 miteinander elektrisch und mechanisch verbunden, so dass die galvanischen Zellen 12.1 bis 12.3 in Reihe geschaltet sind.

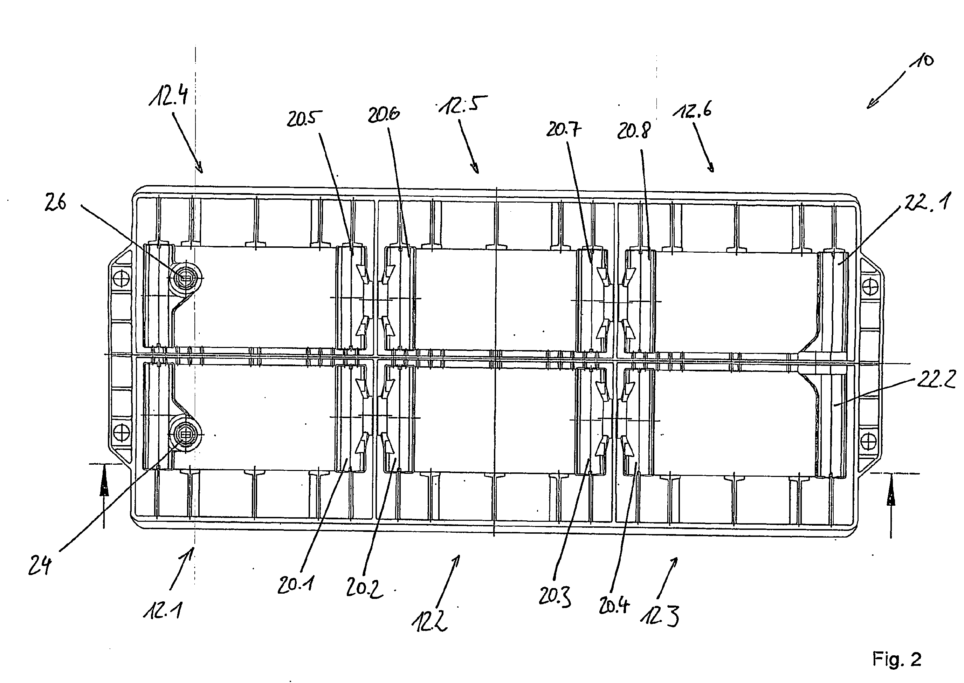

Figur 2 zeigt neben den galvanischen Zellen 12.1 bis 12.3 drei weitere galvanische Zellen 12.4, 12.5 und 12.6, die über zwei Batteriezellenverbindungselemente 22.1, 22.2 mit den galvanischen Zellen 12.1 bis 12.3 elektrisch und mechanisch verbunden und in Reihe geschaltet sind. Wenn an einen Pluspol 24 und an einen Minuspol 26 ein elektrischer Strom angelegt oder von diesen ein elektrischer Strom abgegriffen wird, so fließt der elektrische Strom durch alle galvanischen Zellen 12.1. bis 12.6 und passiert dabei die Batteriezellenverbindungselemente 20.1 bis 20.8 und 22.1, 22.2. Da der elektrische Strom durch eine Vielzahl Batteriezellenverbindungselemente treten muss, führen selbst kleine Verbesserungen hinsichtlich des elektrischen Widerstands, den diese Batteriezellenverbindungselemente aufweisen, zu einer relevanten Verminderung des Gesamt-Innenwiderstandes der Batterie 10.

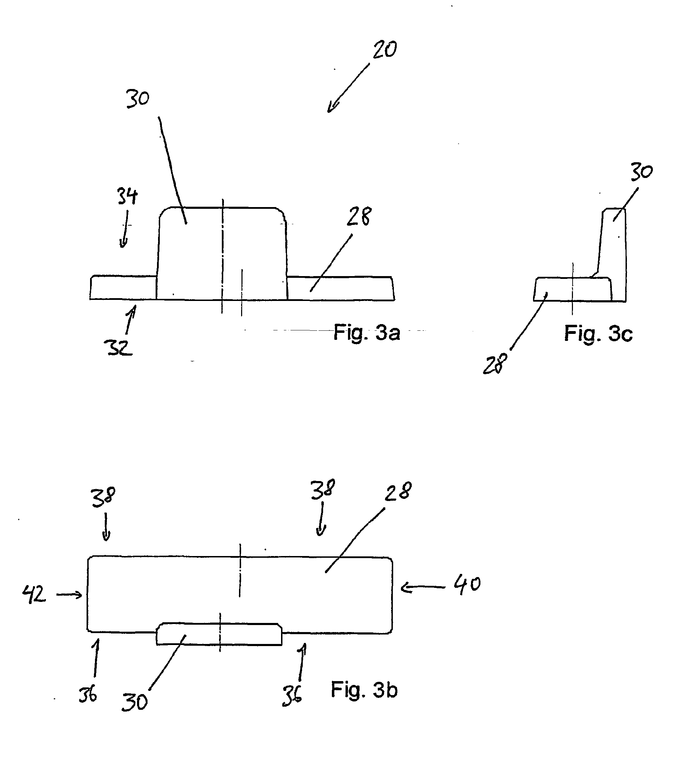

Figur 3a zeigt ein Batteriezellenverbindungselement 20, das einen Verbinder 28 und eine Schweißlasche 30 besitzt. Der Verbinder 28 besitzt eine im Wesentlichen quaderförmige Grundgestalt mit einer Unterseite 32, einer Oberseite 34, einer schweißlaschenseitigen Längsseite 36 (Figur 3b), einer schweißlaschenabgewandten Längsseite 38, einer ersten lateralen Längsseite 40 und einer zweiten lateralen Längsseite 42. Die Schweißlasche 30 ist an der schweißlaschenseitigen Längsseite 36 des Verbinders 28 angeordnet.

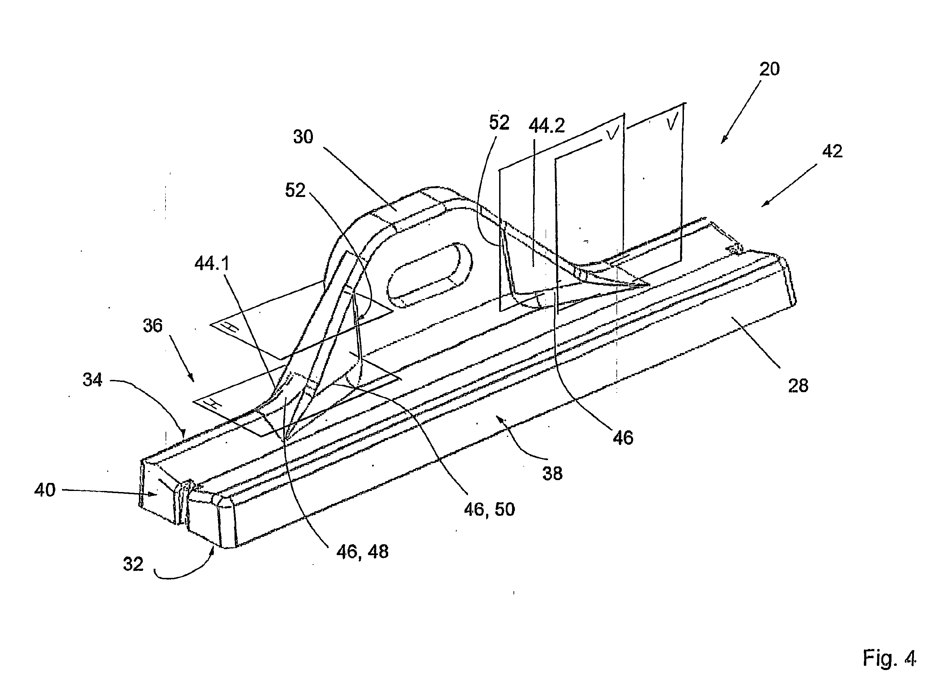

Figur 4 zeigt eine perspektivische Ansicht des Batteriezellenverbindungselements 20 für eine erfindungsgemäße Batterie, bei dem gleiche Objekte mit den gleichen Bezugszeichen versehen sind. Das Batteriezellenverbindungselement 20 umfasst ein erstes Kontaktelement 44.1 und ein zweites Kontaktelement 44.2. Beide Kontaktelemente 44.1, 44.2 sind sowohl mit der Schweißlasche 30 als auch mit dem Verbinder 28 einstückig verbunden und laufen keilförmig sich verjüngend auf die Schweißlasche 30 zu.

Beide Kontaktelemente 44.1, 44.2 weisen auf eine Horizontale H bezogene horizontale Querschnitte auf, die eine mit abnehmendem Abstand zu der Oberseite 34 zunehmende Fläche besitzen. In anderen Worten verjüngen sich die Kontaktelemente 44.1, 44.2 nach oben. Die Richtung "oben" bezieht sich wie die sonstigen Orientierungsangaben in der vorliegenden Beschreibung stets auf eine Einbaulage des Batteriezellenverbindungselements 20 in einer Batterie 10, wie sie in den Figuren 1 und 2 gezeigt ist. diese Orientierungsangaben sind jedoch nicht einschränkend zu verstehen, sondern dienen lediglich der Verdeutlichung einer besonders geeigneten Anordnung.

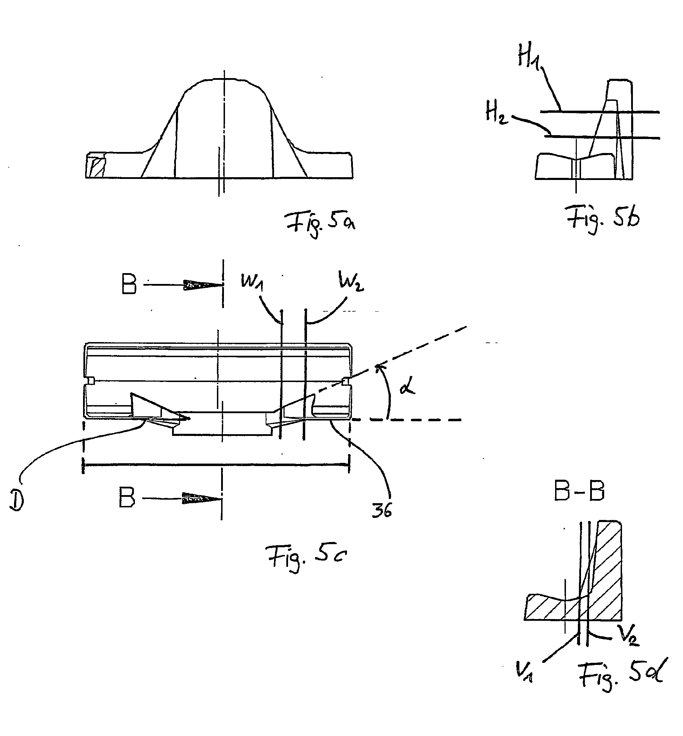

Die Kontaktelemente 44.1, 44.2 sind zudem so ausgebildet, dass Schnitte mit einer entlang der schweißlaschenseitigen Längsseite 36 verlaufenden Vertikalebene V eine Fläche besitzen, die mit zunehmendem Abstand von der schweißlaschenseitigen Längsseite 36 abnimmt. Die Kontaktelemente 44.1, 44.2 sind zudem so ausgebildet, dass ein Schnitt mit einer senkrecht zu der schweißlaschenseitigen Längsseite 36 verlaufenden vertikalen Ebene W (Figur 5c) einen mit zunehmendem Abstand von der Schweißlasche 30 zunehmenden Querschnitt besitzt. Die Kontaktelemente 44.1, 442. haben damit eine prismenartige Grundstruktur, deren Grundfläche im Wesentlichen dreieckig ist, wie in Figur 5c durch das Dreieck D angedeutet ist. Der Öffnungswinkel α zwischen den beiden größten Schenkeln liegt zwischen 30° und 60°, wobei einer der Schenkel parallel zu der schweißlaschenseitigen Längsseite 36 verläuft.

Figur 4 zeigt einen verbinderseitigen Übergangsbereich 46, der einen lateralen Abschnitt 48 und einen medialen Abschnitt 50 umfasst. Im lateralen Abschnitt 48 besitzt der Übergangsbereich einen Lateral-Krümmungsradius von 3 mm bis 10 mm und im medialen Abschnitt 50 beträgt ein Medial-Krümmungsradius 2 mm. In einem schweißlaschenseitigen Übergangsbereich 52 liegt ein Krümmungsradius von ebenfalls 2 mm vor.

Das Batteriezellenverbindungselement 20 wird hergestellt, indem Blei in eine geeignet geformte Form gegossen wird. Um das entstandene Batteriezellenverbindungselement leicht entformen zu können, laufen die Schweißlasche 30, der Verbinder 28 und die Kontaktelemente 44.1, 44.2 nach oben hin konisch zu und bilden dabei mit ihren entsprechenden Flächen relativ zu einer entsprechenden vertikalen Ebene einen Winkel von 2° bis 7°.

### Bezugszeichen

- 10: Batterie
- 12.1, ..., 12.6: galvanische Zelle
- 14.1, 14.2, 14.3: positiver Plattensatz
- 16.1, 16.2, 16.3: negativer Plattensatz
- 18.1, 18.2: Trennwand
- 20.1., 20.2, ..., 20.8 22.1, 22.2: Batteriezellenverbindungselement
- 24: Pluspol
- 26: Minuspol
- 28: Verbinder
- 30: Schweißlasche

- 32: Unterseite
- 34: Oberseite
- 36: schweißlaschenseitige Längsseite
- 38: schweißlaschenabgewandte Längsseite
- 40: erste laterale Längsseite

- 42: zweite laterale Längsseite
- 44.1, 44.2: Kontaktelement
- 46: verbinderseitiger Übergangsbereich
- 48: lateraler Abschnitt
- 50: medialer Abschnitt
- 52: schweißlaschenseitiger Übergangsbereich

- V: vertikale Ebene
- H: horizontale Ebene
- S: Seitenlinie
- α: Öffnungswinkel

## Patentansprüche

1. Batterie mit mindestens einem Batteriezellenverbindungselement (20), das
(a) einen eine quaderförmige Grundgestalt aufweisenden Verbinder (28) zum Verbinden mit mindestens einer Polplatte an einer Unterseite (32) des Verbinders (28) und
(b) eine Schweißlasche (30), die mit dem Verbinder (28) elektrisch leitend verbunden ist, umfasst,
(c) wobei in Einbaulage der Batterie (10)
der Verbinder (28) im Wesentlichen horizontal angeordnet ist und die Schweißlasche (30) im Wesentlichen vertikal angeordnet ist, und
(d) wobei der Verbinder (28) eine der Unterseite (32) gegenüber liegende Oberseite (34) und
(e) mindestens eine an die Unterseite (32) angrenzende Längsseite (36) besitzt, an der die Schweißlasche (30) mit dem Verbinder (28) verbunden ist,
**dadurch gekennzeichnet, dass**
(f) die Schweißlasche (30) über mindestens ein lateral an der Schweißlasche (30) angeordnetes und auf die Oberfläche des Verbinders (28) führendes Kontaktelement (44.1, 44.2) mit dem Verbinder (28) elektrisch verbunden ist.

2. Batterie nach Anspruch 1, **dadurch gekennzeichnet, dass** sie ein Bleiakkumulator (10), insbesondere ein Nutzkraftwagen-Bleiakkumulator, ist.

3. Batterie nach einem der vorstehenden Ansprüche, **dadurch gekennzeichnet, dass** die Schweißlasche (30) über zwei lateral an der Schweißlasche (30) angeordnete und auf die Oberfläche des Verbinders (28) führende Kontaktelemente (44.1, 44.2) mit dem Verbinder elektrisch verbunden ist.

4. Batterie nach einem der vorstehenden Ansprüche, **dadurch gekennzeichnet, dass** das Kontaktelement (44.1, 44.2) einen Querschnitt aufweist, der mit abnehmendem Abstand von der Oberseite (34) des Verbinders (28) zunimmt.

5. Batterie nach einem der vorstehenden Ansprüche, **dadurch gekennzeichnet, dass** das Kontaktelement (44) einen Querschnitt aufweist, der mit zunehmendem Abstand von der Schweißlasche (30) zunimmt.

6. Batterie nach einem der vorstehenden Ansprüche, **dadurch gekennzeichnet, dass**
- das Kontaktelement (44) einen verbinderseitigen Übergangsbereich (46) besitzt, in dem es in den Verbinder (28) übergeht,
- der verbinderseitige Übergangsbereich (46) einen lateralen Abschnitt (48) besitzt und
- der laterale Abschnitt (48) einen Lateral-Krümmungsradius aufweist, der zwischen 3 mm und 10 mm liegt.

7. Batterie nach einem der vorstehenden Ansprüche, **dadurch gekennzeichnet,**
**dass**
- das Kontaktelement (44) einen verbinderseitigen Übergangsbereich (46) besitzt, in dem es in den Verbinder übergeht,
- der verbinderseitige Übergangsbereich (46) einen medialen Abschnitt (50) besitzt und
der mediale Abschnitt (50) einen Medial-Krümmungsradius aufweist, der zwischen 1 mm und 3 mm liegt.

8. Batterie nach einem der vorstehenden Ansprüche, **dadurch gekennzeichnet, dass** das Kontaktelement (44) in einem schweißlaschenseitigen Übergangsbereich (52), in dem es in die Schweißlasche (30) übergeht, einen Krümmungsradius aufweist, der zwischen 0,25 mm und 2 mm liegt.

9. Batterie nach einem der vorstehenden Ansprüche, **dadurch gekennzeichnet, dass** das Batteriezellenverbindungselement (20) einstückig ausgebildet ist.

10. Batterie nach Anspruch 9, **dadurch gekennzeichnet, dass** das Batteriezellenverbindungselement (20) ein Gussstück, insbesondere aus Blei, ist.

11. Batterie nach einem der vorstehenden Ansprüche, **dadurch gekennzeichnet, dass** ein auf die Oberseite (34) projizierter Kontaktelement-Querschnitt (D) des Kontaktelements eine Seitenlinie (S) besitzt, die unter einem Winkel (α) von 30° bis 60° zu der Längsseite (36) des Verbinders (28) verläuft.

12. Batterie nach einem der vorstehenden Ansprüche, **dadurch gekennzeichnet, dass** der Kontaktelement-Querschnitt (D) dort, wo das Kontaktelement (44) in den Verbinder (28) übergeht, kleiner ist als ein horizontaler Querschnitt der Schweißlasche (30).

13. Batterie nach einem der vorstehenden Ansprüche, **dadurch gekennzeichnet, dass** das Kontaktelement (44.1, 44.2) verbinderseitig im Wesentlichen jenseits einer horizontalen Ebene angeordnet ist, die durch die Längsseite (36) verläuft, an der die Schweißlasche (30) mit dem Verbinder (28) verbunden ist.

14. Batterie nach einem der vorstehenden Ansprüche, **dadurch gekennzeichnet, dass** die Schweißlasche (30) einen mit zunehmendem Abstand von dem Verbinder (28) abnehmenden Querschnitt aufweist, so einander gegenüber liegende Seitenflächen der Schweißlaschen (30) einen Winkel von 2° bis 10° zueinander aufweisen.

## Claims

1. A battery having at least one battery cell connecting element (20) which has
(a) a connector (28) which has a cuboid basic shape for connection to at least one pole plate on a lower face (32) of the connector (28), and
(b) a welding lug (30) which is electrically conductively connected to the connector (28),
(c) wherein, when the battery (10) is in the installed position,
the connector (28) is arranged essentially horizontally and
the welding lug (30) is arranged essentially vertically, and
(d) wherein the connector (28) has an upper face (34) opposite the lower face (32), and
(e) at least one longitudinal face (36) which is adjacent to the lower face (32) and on which the welding lug (30) is connected to the connector (28),
**characterized in that**
(f) the welding lug (30) is electrically connected to the connector (28) via at least one contact element (44.1, 44.2), which is arranged laterally on the welding lug (30) and leads to the surface of the connector (28).

2. The battery as claimed in claim 1, **characterized in that** the battery is a lead-acid rechargeable battery (10), in particular a commercial motor vehicle lead-acid rechargeable battery.

3. The battery as claimed in one of the preceding claims, **characterized in that** the welding lug (30) is electrically connected to the connector via two contact elements (44.1, 44.2), which are arranged laterally on the welding lug (30) and lead to the surface of the
connector (28).

4. The battery as claimed in one of the preceding claims, **characterized in that** the contact element (44.1, 44.2) has a cross section which increases as the distance from the upper face (34) of the connector (28) decreases.

5. The battery as claimed in one of the preceding claims, **characterized in that** the contact element (44) has a cross section which increases as the distance from the welding lug (30) increases.

6. The battery as claimed in one of the preceding claims, **characterized in that**
- the contact element (44) has a connector-side transitional area (46) in which it merges into the connector (38),
- the connector-side transitional area (46) has a lateral section (48), and
- the lateral section (48) has a lateral radius of curvature which is between 3 mm and 10 mm.

7. The battery as claimed in one of the preceding claims, **characterized**
**in that**
- the contact element (44) has a connector-side transitional area (46) in which it merges into the connector,
- the connector-side transitional area (46) has a medial section (50), and
the medial section (50) has a medial radius of curvature which is between 1 mm and 3 mm.

8. The battery as claimed in one of the preceding claims, **characterized in that** the contact element (44) has a radius of curvature which is between 0.25 mm and 2 mm in a transitional area (52) on the welding lug side, in which the contact element merges into the welding lug (30).

9. The battery as claimed in one of the preceding claims, **characterized in that** the battery cell connecting element (20) is formed integrally.

10. The battery as claimed in claim 9, **characterized in that** the battery cell connecting element (20) is a casting, in particular composed of lead.

11. The battery as claimed in one of the preceding claims, **characterized in that** a contact element cross section (D) of the contact element projected onto the upper face (34) has a side line (S) which runs at an angle (α) of 30° to 60° to the longitudinal face (36) of the connector (28).

12. The battery as claimed in one of the preceding claims, **characterized in that** the contact element cross section (D) is less than a horizontal cross section of the welding lug (30) where the contact element (44) merges into the connector (28).

13. The battery as claimed in one of the preceding claims, **characterized in that**, on the connector side, the contact element (44.1, 44.2) is arranged essentially beyond a horizontal plane which runs through the longitudinal face (36) on which the welding lug (30) is connected to the connector (28).

14. The battery as claimed in one of the preceding claims, **characterized in that** the welding lug (30) has a cross section which decreases as the distance from the connector (28) increases, such that mutually opposite side surfaces of the welding lugs (30) are at an angle of 2° to 10° to one another.

## Revendications

1. Batterie présentant au moins un élément (20) de liaison des cellules de batterie qui comporte
(a) un raccord (28) qui présente fondamentalement la forme d'un parallélépipède rectangle et qui est destiné à être raccordé à au moins une plaque polaire du côté inférieur-(32) du raccord (28) et
(b) une patte soudée (30) reliée de manière électriquement conductrice au raccord (28),
(c) le raccord (28) étant disposé essentiellement à l'horizontale et la patte de soudage (30) étant disposée essentiellement à la verticale lorsque la batterie (10) est en position montée,
(d) le raccord (28) présentant un côté supérieur (34) situé face au côté inférieur (32) et
(e) au moins un côté longitudinal (36) adjacent au côté inférieur (32) et auquel la patte soudée (30) est reliée au raccord (28),
**caractérisée en ce que**
(f) la patte soudée (30) est reliée électriquement au raccord (28) par l'intermédiaire d'au moins un élément de contact (44.1, 44.2) disposé sur la patte soudée (30) et conduisant à la surface du raccord (28).

2. Batterie selon la revendication 1, **caractérisée en ce qu'**elle est un accumulateur (10) au plomb et en particulier un accumulateur au plomb pour véhicule utilitaire.

3. Batterie selon l'une des revendications précédentes, **caractérisée en ce que** la patte soudée (30) est reliée électriquement au raccord par deux éléments de contact (44.1; 44.2) disposés latéralement sur la patte soudée (30) et conduisant à la surface du raccord (28).

4. Batterie selon l'une des revendications précédentes, **caractérisée en ce que** l'élément de contact (44.1, 44.2) présente une section transversale qui augmente lorsque sa distance par rapport au côté supérieur (34) du raccord (28) augmente.

5. Batterie selon l'une des revendications précédentes, **caractérisée en ce que** l'élément de contact (44) présente une section transversale qui augmente lorsque la distance par rapport à la patte soudée (30) augmente.

6. Batterie selon l'une des revendications précédentes, **caractérisée en ce que**
- l'élément de contact (44) possède une partie de transition (46) située du côté du raccord et par laquelle il se prolonge en le raccord (28),
- **en ce que** la partie de transition (46) située du côté du raccord possède une section latérale (48) et
- **en ce que** la section latérale (48) présente un rayon de courbure latéral compris entre 3 mm et 10 mm.

7. Batterie selon l'une des revendications précédentes, **caractérisée en ce que**
- l'élément de contact (44) possède une partie de transition (46) située du côté du raccord et par laquelle il se prolonge en le raccord,
- **en ce que** la partie de transition (46) située du côté du raccord possède une section médiale (50) et
- **en ce que** la section médiale (50) présente un rayon de courbure médial compris entre 1 mm et 3 mm.

8. Batterie selon l'une des revendications précédentes, **caractérisée en ce que** dans une partie de transition (52) située du côté de la patte soudée et par laquelle l'élément de contact (44) se prolonge en la patte soudée (30), l'élément de contact présente un rayon de courbure compris entre 0,25 mm et 2 mm.

9. Batterie selon l'une des revendications précédentes, **caractérisée en ce que** l'élément (20) de raccordement de cellule de batterie est d'un seul tenant.

10. Batterie selon la revendication 9, **caractérisée en ce que** l'élément (20) de raccordement de cellule de batterie est une pièce coulée, en particulier en plomb.

11. Batterie selon l'une des revendications précédentes, **caractérisée en ce qu'**une section transversale (D) de l'élément de contact, projetée sur le côté supérieur (34), possède une ligne latérale (S) qui s'étend par rapport au côté longitudinal (36) du raccord (28) en formant un angle (α) compris entre 30° et 60°.

12. Batterie selon l'une des revendications précédentes, **caractérisée en ce que** la où l'élément de contact (44) se prolonge en le raccord (28), la section transversale (D) de l'élément de contact est plus petite que la section transversale horizontale de la patte soudée (30).

13. Batterie selon l'une des revendications précédentes, **caractérisée en ce que** du côté du raccord, l'élément de contact (44.1, 44.2) est disposé essentiellement du côté d'un plan horizontal qui s'étend dans le côté longitudinal (36) sur lequel la patte soudée (30) est reliée au raccord (28).

14. Batterie selon l'une des revendications précédentes, **caractérisée en ce que** la patte soudée (30) présente une section transversale qui diminue lorsque sa distance par rapport au raccord (28) augmente, de telle sorte que les surfaces latérales opposées de la patte soudée (30) forment l'une par rapport à l'autre un angle compris entre 2° et 10°.
